# EUROPEAN PATENT SPECIFICATION

(11) **EP 0 691 695 B1**
(45) Date of publication and mention of the grant of the patent: **03.05.2000**
(21) Application number: 95110333.2
(22) Date of filing: 06.08.1992
(51) Int. Cl.: H01M 2/08, H01M 2/02

(54) **Film type battery**
Dünnschichttyp Batterie
Batterie du type à couches minces

(30) Priority: 09.08.1991 JP 22465491; 16.10.1991 JP 29823891
(43) Date of publication of application: 10.01.1996
(62) Divisional of application: 92916815.1
(73) Proprietor: YUASA CORPORATION, Takatsuki-shi, Osaka 569 (JP)
(72) Inventor: Murata, Kazuo, c/o Yuasa Corp., Takatsuki-shi, Osaka 569 (JP); Takeuchi, Kenichi, Takatsuki-shi, Osaka 569 (JP); Izuchi, Syuichi, Takatsuki-shi, Osaka 569 (JP); Kato, Shiro, Takatsuki-shi, Osaka 569 (JP)
(74) Representative: Stoner, Gerard Patrick

(56) References cited:
- DE-B- 1 099 018
- GB-A- 2 201 031
- PATENT ABSTRACTS OF JAPAN vol. 16 no. 347 (E-1240) ,27 July 1992 & JP-A-04 106867 (YUASA BATTERY CO LTD)
- PATENT ABSTRACTS OF JAPAN vol. 13 no. 16 (E-703) ,13 January 1989 & JP-A-63 224161 (TOSHIBA BATTERY CO LTD)
- PATENT ABSTRACTS OF JAPAN vol. 14 no. 524 (E-1003) ,16 November 1990 & JP-A-02 220351 (FUJI ELCTROCHEM CO LTD)
- PATENT ABSTRACTS OF JAPAN vol. 15 no. 170 (E-1062) ,30 April 1991 & JP-A-03 037954 (YUASA BATTERY CO LTD)
- PATENT ABSTRACTS OF JAPAN vol. 13 no. 439 (E-827) ,3 October 1989 & JP-A-01 167947 (HITACHI MAXELL LTD)

## Description

This invention relates to film type batteries e.g. for use in portable electric and battery powered equipment.

In recent years, portable electric and battery powered equipment have become smaller. Demands to reduce the size and thickness of batteries have increased in proportion, especially demands for a film-type battery with high reliability and a thickness not more than 0.5 mm.

Film-type batteries using light metal such as lithium for negative active material are available as thin as 0.1 mm, the thicknesses of the current collector and sealing portions becoming as small as tens of microns.

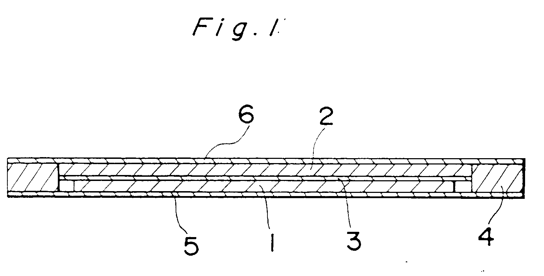

Fig. 1 is a vertical sectional view showing a conventional film type battery having a negative active material layer 1, e.g. of metallic lithium, a positive active material layer 2 and an ion-conductive electrolyte layer 3 forming a generating element. A negative terminal plate 5 and a positive terminal plate 6 serve simultaneously as current collectors and as a container. These may be stainless steel or nickel plates having a thickness of 15 to 30 microns. A frame of sealing material 4, which seals the generating element in between the terminal plates 5, 6 and insulates the terminal plates from one another is installed between the peripheries of the terminal plates. The sealing material is denatured polypropylene resin, to which the plates are thermally bonded.

When a film-type battery having the above construction has been put in service for a long period, there have been problems with battery performance being spoiled by electrolyte leaking from or moisture and oxygen leaking to the sealing portion. If moisture enters it reacts with metallic lithium forming the negative active material so that battery capacity is reduced.

GB-2201031 describes a battery of the above-described construction in which the edge of the lower terminal plate is turned up and approaches close to the edge of the upper terminal plate to enclose the generating element. A composite rectangular-section frame of sealing material extends around between the opposed terminal plate edges. It has a main rectangular-section body of water-impermeable material, e.g. polyethylene or PVDC, and a thin internal solvent-resistant facing layer e.g. of polyester, nylon, PVDC or EVOH, to retain the electrolytes ether solvent. Its outer and upper faces carry a thin layer of another polymer e.g. EVA, to provide adhesion to the steel casing. The exemplified battery is 1.4 mm thick: not really a film-type battery.

An aim of this invention is to provide a film-type battery which is excellent in long-term reliability.

The present invention is defined in claim 1 and is a film-type battery using a frame of sealing material having an inside electrolyte-resistant layer of silicone rubber-type adhesive agent and an outside water-resistant layer of denatured polyolefin-type resin.

A material formed by graft polymerising maleic anhydride to polypropylene resin can be used for the denatured polyolefin-type resin.

In the drawings;
Fig. 1 exemplifies a known construction, already described,
Fig. 2 is a cross-sectional view of a battery exemplifying the invention, and
Fig. 3 is a graph showing storage performance of the Fig. 2 battery relative to the known type.

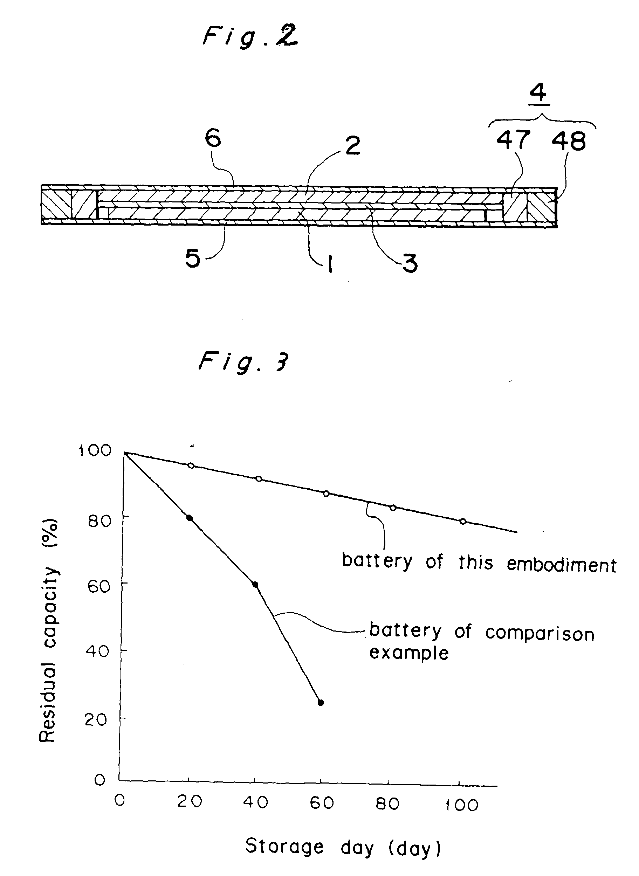

Fig. 2 is a sectional view showing a film-type battery embodying the invention. The basic components are numbered as in Fig. 1. Metallic lithium is used for the negative active material. The principal component of the positive active material is maganese dioxide.

The battery has a battery capacity of 50 mAh and a thickness of 0.1 mm. The electrolyte layer 3 is composed of polypropylene non-woven fabric, and the non-woven fabric is impregnated with nonaqueous-solvent electrolyte prepared by dissolving lithium perchlorate in a solvent of propylene carbonate mixed with dimethoxy ethane. The terminal plates 5, 6 are stainless steel plates 15 µm thick.

The sealing material 4 has a double-layer structure with an inside sealing material 47 and an outside sealing material 48, each 1.5 mm wide. The inside sealing material 47 is silicone rubber group adhesive agent and the outside sealing material 48 is of denatured polypropylene resin. The sealing material 4 is connected to the terminal plates 5, 6 at 190°C by means of thermal pressure bonding. This thermal pressure bonding is carried out under reduced pressure in order to remove air from the battery interior.

For comparison, a film-type battery was prepared having the same structure except that the sealing material 4 was a single layer of denatured polypropylene resin 3 mm wide; that is, the same structure as in Fig. 1. It also had a battery capacity of 50 mAh and a thickness of 0.1 mm.

The storage performances of the batteries were compared. Each was stored in an air-conditioned bath having a relative humidity of 90 to 95%, and the relation between days of storage and decrease in battery capacity was examined. The decrease in battery capacity was examined. The decrease in battery capacity was examined by discharging down to an end voltage of 2V at 25°C with a current of 0.5 mAh and by metering a duration time to measure a residual capacity. Five batteries were tested for each measuring stage, and mean values calculated. The results are shown in Fig. 3 where the abscissa denotes the days of storage day and the ordinate denotes residual capacity (%).

As seen from Fig. 3, the decrease in battery capacity of the battery embodying the invention was very small and its storage performance excellent. The decrease in battery capacity of the battery of comparison example was large, and its electrolyte leaked after 60 days. In the battery of the embodiment, since the denatured polypropylene resin forming the component material of the outside sealing material 48 has a small moisture permeability, the ingress of moisture into the battery is restricted. Exhaustion of the metallic lithium serving as negative active material, caused by reaction with moisture, is thereby prevented. At the same time the silicone rubber-group adhesive agent forming the component material of the inside sealing material 47 has a large resistance to electrolyte, so that leakage of the electrolyte is also prevented. Consequently, the decrease in battery capacity is very small and long-term reliability is improved.

The structure of the sealing material 4 is not limited to a double-layer structure. It may be a structure including three or more layers, provided that a layer of the olefin material having small moisture permeability is installed at the outside and a layer of the silicone material having a large resistance to the electrolyte is installed at the inside.

## Claims

1. A film-type battery comprising
a layer-form generating element comprising laminated layers of negative active material (1), electrolyte (3) and positive active material (2);
negative and positive terminal plates (5,6) on the respective faces of the generating element, serving to contain the generating element and act as negative and positive current collectors, and having peripheries which extend beyond the generating element, and
a frame (4) of sealing material disposed between the opposed peripheries of the terminal plates (5,6) to seal in the generating element and insulate the terminal plates (5,6) from one another, the frame having an outside water-resistant layer and an inside electrolyte-resistant layer, and wherein the inside layer (47) is of silicone rubber-type adhesive agent and the outside layer (48) is of denatured polyolefin-type resin.

2. A battery according to claim 1 in which the outside layer (48) is of denatured polypropylene resin.

3. A battery according to claim 1 or claim 2 in which said adhesive agent and polyolefin-type resin are bonded to the terminal plates (5,6) by thermal pressure bonding.

4. A battery according to any one of the preceding claims in which the frame (4) of sealing material is a two-layer construction consisting of said inside and outside layers (47,48).

5. A battery according to any one of the preceding claims in which the terminal plates (5,6) are stainless steel plates.

6. A battery according to any one of the preceding claims which is not more than 0.5mm thick.

7. A battery according to claim 6 which is 0.1mm thick.

## Revendications

1. Pile ou accumulateur du type en film comprenant
un élément générateur en forme de couche comprenant des couches stratifiées de matière active négative (1), d'électrolyte (3) et de matière active positive (2) ;
des plaques terminales négative et positive (5, 6) sur les faces respectives de l'élément générateur, servant à contenir l'élément générateur et agissant comme collecteurs de courant négatif et positif, et ayant des périphéries qui s'étendent au-delà de l'élément générateur, et
un cadre (4) constitué de matière de scellement, disposé entre les périphéries opposées des plaques terminales (5, 6) pour enfermer l'élément générateur et isoler les plaques terminales (5, 6) l'une de l'autre, le cadre ayant une couche extérieure résistante à l'eau et une couche intérieure résistante à l'électrolyte, la couche intérieure (47) étant constituée d'un agent adhésif du type caoutchouc de silicone et la couche extérieure (48) étant constituée d'une résine du type polyoléfine dénaturée.

2. Pile ou accumulateur selon la revendication 1, dans lequel la couche extérieure (48) est constituée d'une résine de polypropylène dénaturé.

3. Pile ou accumulateur selon la revendication 1 ou la revendication 2, dans lequel ledit agent adhésif et la résine du type polyoléfine sont liés aux plaques terminales (5, 6) par liaison sous pression à chaud.

4. Pile ou accumulateur selon l'une quelconque des revendications précédentes, dans lequel le cadre (4) de matière de scellement est une structure à deux couches formée par lesdites couches intérieure et extérieure (47, 48).

5. Pile ou accumulateur selon l'une quelconque des revendications précédentes, dans lequel les plaques terminales (5, 6) sont des plaques d'acier inoxydable.

6. Pile ou accumulateur selon l'une quelconque des revendications précédentes dont l'épaisseur ne dépasse pas 0,5 mm.

7. Pile ou accumulateur selon la revendication 6, ayant une épaisseur de 0,1 mm.

## Patentansprüche

1. Batterie des Filmtyps, umfassend
ein stromerzeugendes Element in Schichtform, das laminierte Schichten von negativem aktivem Material (1), Elektrolyt (3) und positivem aktivem Material (2) umfaßt;
eine negative und eine positive Endplatte (5, 6) auf den jeweiligen Flächen des stromerzeugenden Elements, die dazu dienen, das stromerzeugende Element einzuschließen und als negativer bzw. positiver Stromabnehmer zu wirken, und deren Ränder über das stromerzeugende Element hinausragen; und
einen Rahmen (4) aus Dichtmaterial, der sich zwischen den einander gegenüberliegenden Rändern der Endplatten (5, 6) befindet, so daß das stromerzeugende Element dicht abgeschlossen ist und die Endplatten (5, 6) gegeneinander isoliert sind, wobei der Rahmen eine wasserbeständige Außenschicht und eine elektrolytbeständige Innenschicht aufweist und wobei die Innenschicht (47) aus einem Kleber des Silikonkautschuktyps besteht und die Außenschicht (48) aus einem Harz des Typs denaturiertes Polyolefin besteht.

2. Batterie gemäß Anspruch 1, wobei die Außenschicht (48) aus denaturiertem Polypropylenharz besteht.

3. Batterie gemäß Anspruch 1 oder 2, wobei der Kleber und das Harz des Polyolefintyps durch thermisches Verpressen mit den Endplatten (5, 6) verbunden sind.

4. Batterie gemäß einem der vorstehenden Ansprüche, wobei der Rahmen (4) aus dem Dichtmaterial einen zweischichtigen Aufbau hat und aus der Innen- sowie der Außenschicht (47, 48) besteht.

5. Batterie gemäß einem der vorstehenden Ansprüche, wobei es sich bei den Endplatten (5, 6) um Edelstahlplatten handelt.

6. Batterie gemäß einem der vorstehenden Ansprüche, die nicht dicker als 0,5 mm ist.

7. Batterie gemäß Anspruch 6, die 0,1 mm dick ist.
